(19) Europäisches Patentamt / European Patent Office / Office européen des brevets

(11) **EP 2 355 575 B1**

(12) **EUROPEAN PATENT SPECIFICATION**

(45) Date of publication and mention
of the grant of the patent:
**10.07.2013 Bulletin 2013/28**

(51) Int Cl.:
*H04W 28/04* (2009.01)      *H04W 74/08* (2009.01)

(21) Application number: **10152325.6**

(22) Date of filing: **01.02.2010**

(54) **Method of transmitting data**

Verfahren zur Übertragung von Daten

Procédé de transmission de données

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**10.08.2011 Bulletin 2011/32**

(73) Proprietor: **Deutsches Zentrum für Luft- und Raumfahrt e.V.**
**51147 Köln (DE)**

(72) Inventor: **Liva, Gianluigi**
**81243, München (DE)**

(74) Representative: **von Kreisler Selting Werner**
**Deichmannhaus am Dom**
**Bahnhofsvorplatz 1**
**50667 Köln (DE)**

(56) References cited:
**EP-A1- 1 686 746**

• **ENRICO CASINI ET AL: "Contention Resolution Diversity Slotted ALOHA (CRDSA): An Enhanced Random Access Schemefor Satellite Access Packet Networks" IEEE TRANSACTIONS ON WIRELESS COMMUNICATIONS, IEEE SERVICE CENTER, PISCATAWAY, NJ, US, vol. 6, no. 4, 1 April 2007 (2007-04-01), pages 1408-1419, XP011177132 ISSN: 1536-1276**

## Description

The invention is related to a method of transmitting data to an access point over a transmission channel which is shared among a plurality of users.

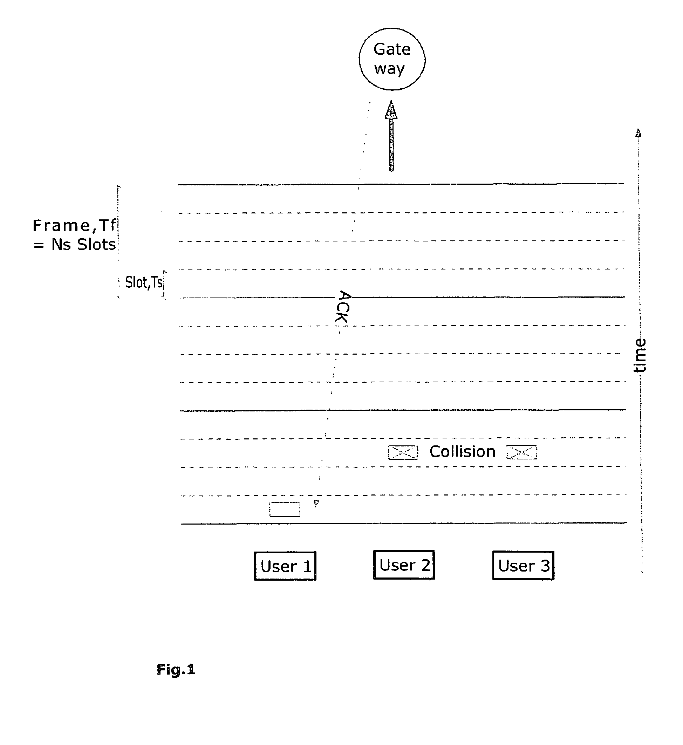

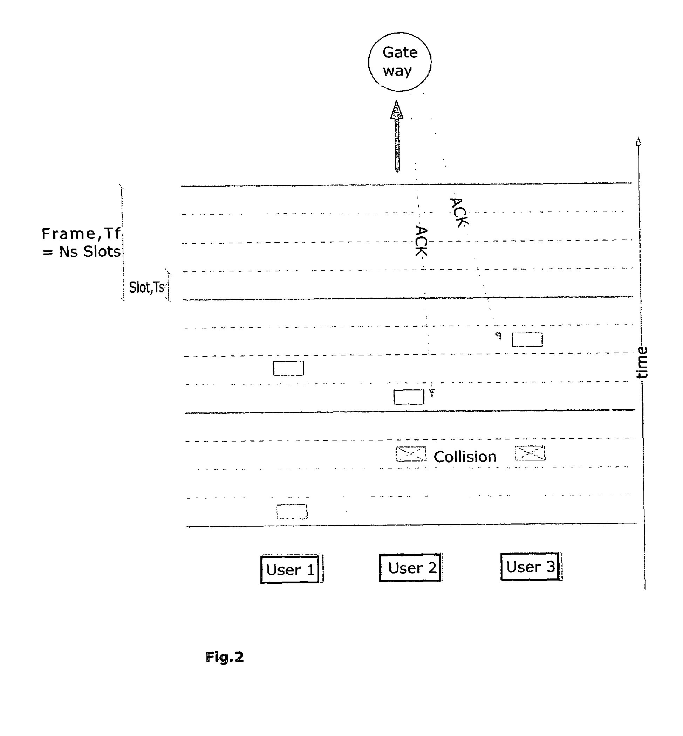

A known method for such a transmission of data is the Contention Resolution Diversity Slotted ALOHA (CRDSA) method. This method could for instance be used in the case of digital packetized uplink from many grounds stations towards a satellite. If we assume that there is no coordination between the users, i.e., the users may transmit their data packets on the same carrier frequency and in the same time instant and if we further assume that there is no Code Division Multiple Access (CDMA) it is obvious that packets sent by various users may collide on the communication medium, meaning that they will create interference among each other. The Slotted ALOHA method is a known protocol aiming to manage such uncoordinated multiple access schemes. In the Slotted ALOHA method the time access is partitioned in frames of duration Tf. Each frame is further partitioned in Ns slots of duration $Ts=Tf/Ns$. Each user must align his packet transmission to a slot, i.e., a synchronization with the frame structure must be kept by each user. Each user then transmits data independently with respect to the others and awaits for an acknowledgement from the gateway, which is the common access point. If no acknowledgement is received meaning that a collision has taken place on the communication medium, the user retransmits his packet with a random delay. This procedure is repeated until the packet transmission is successful. The concept of the Slotted ALOHA method is shown in figures 1 and 2.

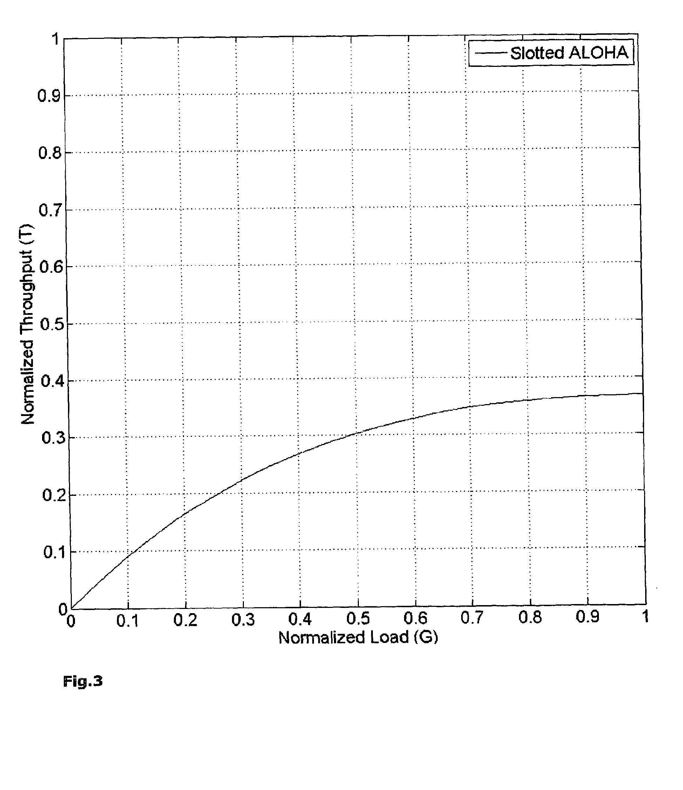

The throughput achieved by the Slotted ALOHA method is defined as $T(G)=Ge^{-G}$. The peak throughput for the Slotted ALOHA method is achieved at $G$=1, for which $T\simeq$ 0.3679. This means that if $G$=1 the fraction of packets which will be transmitted successfully in a transmission attempt will be about 36%. G is defined as $G=m/n$, whereby m is the number of packet transmission attempts per frame and n is the number of slots per frame. The throughput which can be achieved with the Slotted ALOHA method as a function of the offered traffic G is shown in figure 3.

As an improvement of the Slotted ALOHA method the Contention Resolution Diversity Slotted ALOHA (CRDSA) method has been developed. Hereby each user transmits two copies of the same packet within a frame in two randomly selected slots. In the header of each packet a pointer to the position of the twin packet is written. If one packet is received without collision by the gateway or access point the pointer can be extracted from the header and is used by the gateway to identify where the twin packet is located in the frame structure. In case the twin packet collided with another packet, an interference cancellation process takes place with the following steps:

- The waveform representation of the twin packet is reconstructed at the gateway, by decoding the correctly received packet, re-encoding it, and modulating it.

- The so-obtained waveform is subtracted from the received signal within the time slot of the twin copy. This is equivalent to canceling the interference caused by the twin packet to the packet colliding in the same slot.

- The collided packet in this slot can now be decoded.

- This process can be iterated, meaning that the recovery of the collided packet will provide a pointer to the twin packet of the collided one. Thus by using this cascade effect, many packets can be recovered by this interference cancellation procedure.

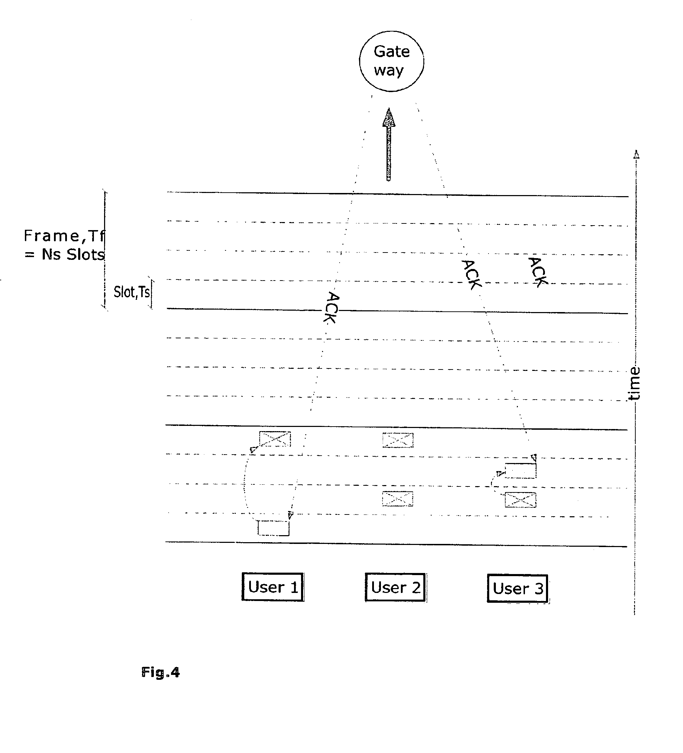

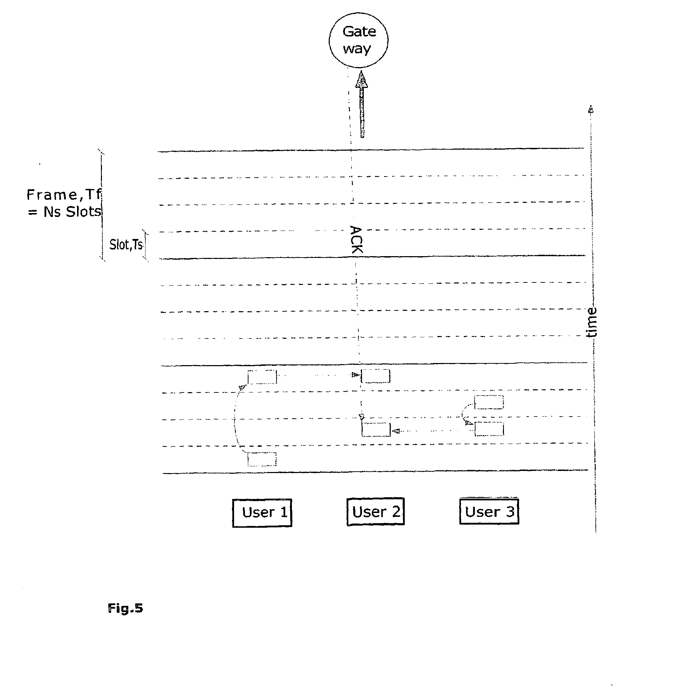

This procedure is depicted in figures 4 and 5 whereby figure 4 shows that user 1 sends two copies of a packet. One copy leads to a collision while the other one is correctly received by the gateway which sends the acknowledgement. The same happens for the packets sent by user 3. Both packets which have been sent by user 2 are lost due to collisions. As it is shown in figure 5 the interference caused by the packet sent by user 1 on the packet of user 2 in the forth time slot is cancelled. This permits to recover the packet of user 2. As an alternative the interference caused by user 3 to user 2 may be cancelled by a subtraction as described above.

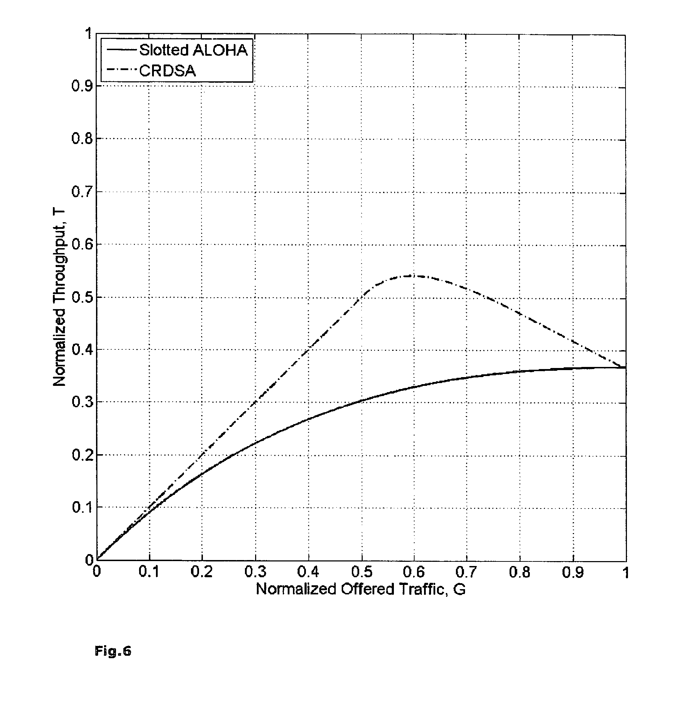

Simulation results provided in "E. Casini, R.D. Gaudenzi, and O.D.R.Herrero, -Contention resolution diversity slotted aloha (crdsa): An enhanced random access scheme for satellite access packet networks.- IEEE Transactions on Wireless Communications, vol. 6, pp. 1408-1419, April 2007" show that almost in the whole range $G \in$[0.1] the CRDSA method provides a larger throughput, with a peak of T $\simeq$ 0.55 for G $\simeq$ 0.65. This is shown in figure 6. As can be further seen the limit for which the normalized throughput is almost linear is extended from G = 0.1 for Slotted ALOHA to G = 0.4 for CRDSA, meaning that for loads lower than G = 0.4 almost all the transmission attempts are successful.

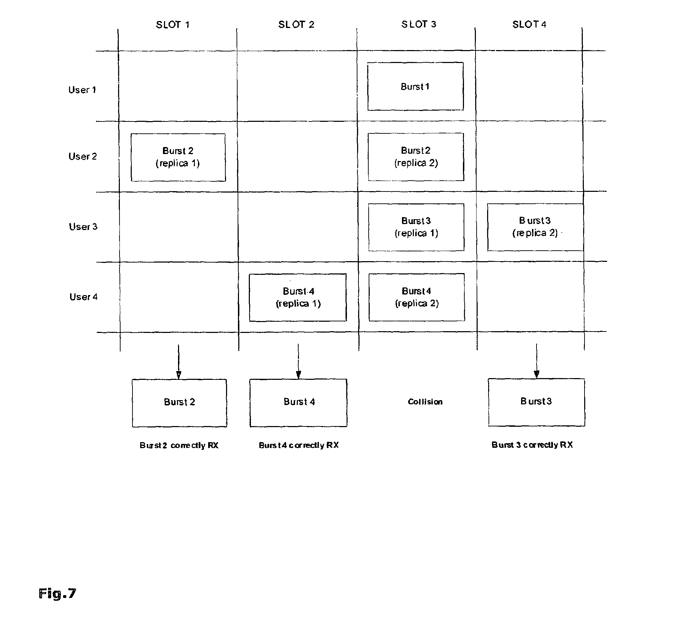

In order to obtain the above mentioned performance an interference cancelation (IC) is needed. This is depicted in the example shown in figure 7.

Herein, a typical collision event is represented.

- User 1 transmits only one replica of a burst in slot 3.

- User 2 transmits two replicas of the same burst in slots 1 and 3.
- User 3 transmits two replicas of the same burst in slots 4 and 3.
- User 4 transmits two replicas of the same burst in slots 2 and 3.

The bursts of User 2, 3 and 4 can be received without collisions in slots 1, 4 and 2 respectively. The burst of User 1 cannot be decoded since it experiences a collision with the replicas of the bursts of Users 2, 3, 4. Nevertheless, the presence of a pointer in the burst replicas permits to know in which slot the corresponding twins are located.

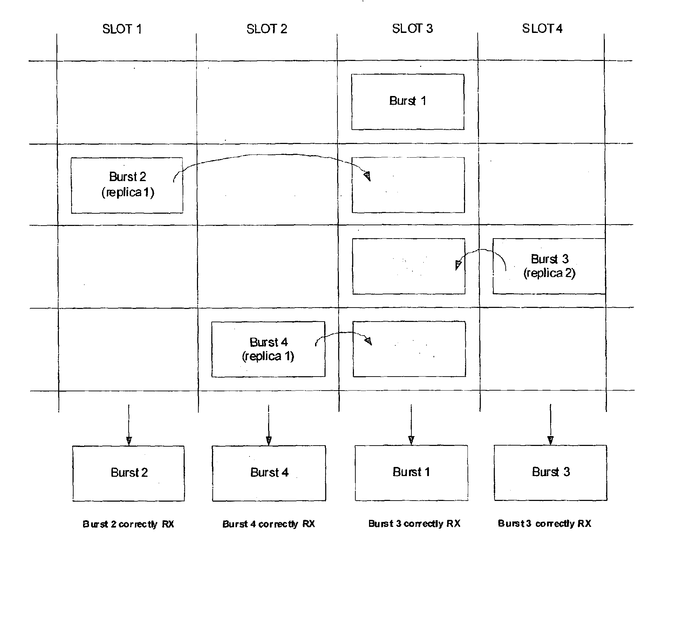

As can be seen in Figure 8, it is then possible to cancel the contribution of Users 2, 3 and 4 from the Slot 3.

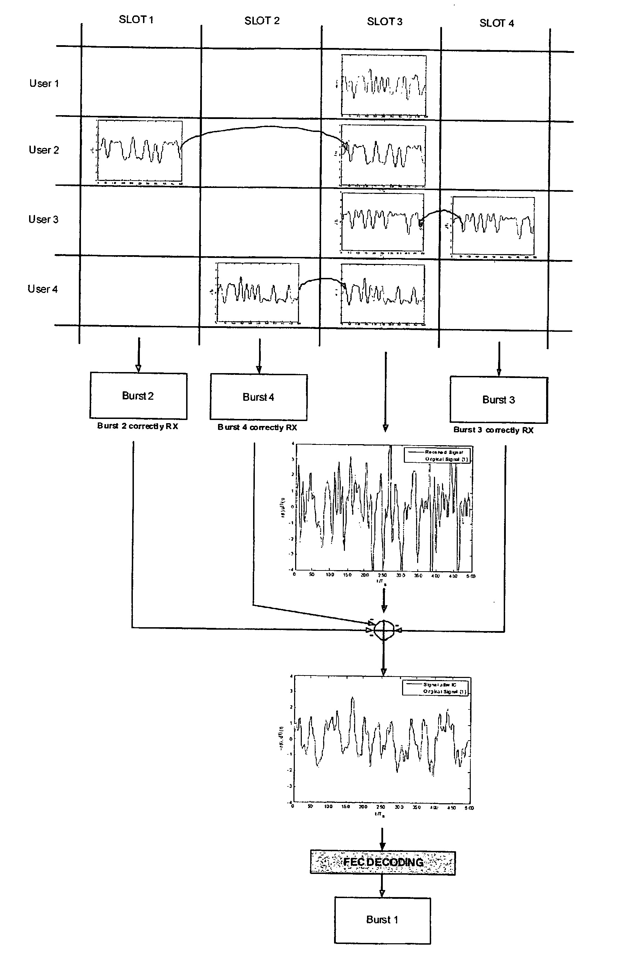

To understand the principle behind this interference cancelation, Figure 9 provides some insights. More specifically, Figure 9 shows:

- The waveforms associated to each burst replica (note that the two replicas of the same burst have the same waveform).
- In Slot 3, the received signal is given by the sum of 4 contributions (the 4 waveforms of bursts 1, 2, 3, 4).
- Given the knowledge of the bursts that are received without collisions (bursts 2, 4, 3), it is possible to reconstruct their waveform in Slot 3, and to subtract these contributions from the signal received in Slot 3.
- Since the reconstruction of the waveforms of bursts 2, 4 and 3 may not be perfect, the signal after interference cancelation may differ remarkably from the signal sent by User 1. The so-called residual interference plays the role of a noisy signal which may jeopardize the correct decoding of burst 1.
- It is therefore crucial to reconstruct the contributions of bursts 2, 4 and 3 as well as possible, minimizing the residual interference.

A case is considered where d users attempt a transmission of a burst within the same slot. It is denoted by $u^{(i)}(t)$ the complex baseband PAM (pulse amplitude modulation) signal transmitted by the i-th user, i.e.

$$u^{(i)}(t) = \sum_{k=0}^{n-1} b_k^{(i)} \gamma(t - kT),$$

where n is the number of symbols composing the frame, $b^{(i)}_k$ is the sequence of symbols and T is the symbol period. By y(t) the pulse shape is denoted. Each contribution is then received within the same slot. It is assumed that each contribution arrives with a random delay $\varepsilon_i$, a random frequency shift $f_i$ (uniformly distributed over the interval $(-f_{max}, f_{max})$) and a random phase offset $\phi i$ (uniformly distributed in $)0, 2\pi)$). Assuming frequency shifts that are small w.r.t. the signal bandwidth (i.e., $f_{max} T \ll 1$), after matched filtering, the received signal is given by

$$r(t) = \sum_{i=0}^{d-1} \tilde{u}^{(i)}(t - \epsilon_i) e^{j2\pi f_i t + j\phi_i} + n(t).$$

In the expression above, n(t) is the Gaussian noise contribution (coloured) and $\tilde{u}^{(i)}(t)$ is the response of the matched filter to $u^{(i)}(t)$.

It is assumed next that the contribution to be recovered is the one for i=0. Thus, the contributions $u^{(1)}(t)$, $u^{(2)}(t)$, ..., $u^{(d-1)}(t)$ represent the interference to be cancelled. Hence it is considered that the d-1 interference contributions deal with bursts that have been correctly detected and decoded in other slots.

To proceed with the interference cancelation (i.e., to reconstruct the interference contributions), it is necessary to estimate the set of parameters $\{\varepsilon_i, f_i, \phi_i\}$, for i=1... d-1. As discussed in E.Casini, R. De Gaudenzi, O. Del Rio, "Contention Resolution Diversity Slotted Aloha (CRDSA): An Enhanced Random Access Scheme for Satellite Access Packet Networks", IEEE Transaction on Wireless Communications, April 2007 and US2006/0171418 A1 the case where $\varepsilon_i$ and $f_i$ can be directly estimated with a good accuracy on the corresponding burst replicas that have been already recovered is considered.

As pointed out in the above mentioned state of the art, this argument does not hold for the phase rotation terms $\varphi_i$ which may vary from slot to slot. It is therefore needed to estimate $\varphi_i$, for each burst, directly on the slot where its contribution shall be eliminated. The estimation of each $\phi_i$ can be performed by means of a correlation with a training sequence to be included in each burst as it is described in the above mentioned state of the art documents. If each user selects a different training sequence from a set of orthogonal sequences, it is indeed possible to limit the interference contribution during the estimation of the phase offset. Thus, the approach used for the estimation of $\phi_I$ is given by:

- The introduction, on the transmitter side, of a training sequence (TS) of length $n_{TS}$ symbols into each burst. Each user picks its TS randomly within a set of orthogonal TSs. The burst format for the i-th users thus looks like

$$\mathbf{b}^{(i)} = \{b_k^{(i)}\} = \{s_0^{(i)}, s_1^{(i)}, \ldots, s_{n_{TS}-1}^{(i)}, d_0^{(i)}, d_1^{(i)}, \ldots, d_{k-n_{TS}-1}^{(i)}, p_0^{(i)}, p_1^{(i)}, \ldots, p_{n-k-1}^{(i)}\}$$

where

  o $[s_0^{(i)} \ldots s_{n_{TS}-1}^{(i)}]$ is the TS on $n_{TS}$ symbols.
  o $[d_0^{(i)} \ldots d_{k-n_{TS}-1}^{(i)}]$ is the burst payload of $k-n_{TS}$ symbols (information part).
  o $[p_0^{(i)} \ldots p_{n-k-1}^{(i)}]$ is the redundancy (parity part) added by the physical layer FEC (Forward Error Correction).

- n the receiver side, the signal is received and sampled. For the i-th user, the received samples related to $[s_0^{(i)} \ldots s_{n_{TS}-1}^{(i)}]$ are given by   $r_k = s_k^{(i)} + i_k + n_k.$

Hereby $I_k$ is the interference contribution coming from the other d-1 colliding bursts. The phase rotation is thus estimated as

$$\hat{\phi}_i = arg\left\{\sum_{w=0}^{n_{TS}-1} r_w^* s_w^{(i)}\right\}.$$

Herein $r^*_w$ is the conjugate of $r_w$.
Thanks to this operation, the interference and the noise contributions are reduced w.r.t. the userful signal by a factor $n_{TS}$ (called also "processing gain"), permitting a quite accurate estimation of $\phi_I$.
- The i-th interference signal is thus reconstructed at the receiver as

$$\hat{u}^{(i)}(t) = \tilde{u}^{(i)}(t - \epsilon_i)e^{j2\pi f_i t + j\hat{\phi}_i}$$

where the reconstruction is not perfect due to the imperfect estimation of $\phi_I$.
This contribution is removed from r(t) leading to

$$r(t) - \hat{u}^{(i)}(t) = \sum_{w=0, w \neq i}^{d-1} \tilde{u}^{(w)}(t - \epsilon_w)e^{j2\pi f_w t + j\hat{\phi}_w} + i^{(i)} + n(t).$$

Herein $i^{(i)}(t)$ is the residual interference contribution caused by the imperfect elimination of the i-th user contribution.
- The procedure is thus iterated for the d-1 colliding users. The last remaining contribution is the one related to the burst we wish to recover. For this burst, the received sampled signal will result hence in

$$r_k'' = g(0)b_k^{(0)} + i_k'' + n_k''.$$

Herein $i_k''$ is the final residual interference contribution due to the imperfect cancelation of the d-1 colliding bursts. The result is that, on top of the noise, there is another term that corrupts the received signal. Thus the FEC decoder has to counteract both the noise and the residual interference. This will lead to the degradation of the Frame Error Rate (FER) after decoding w.r.t. the case where just noise was present.

The more imperfect will be the interference cancelation, the larger will be the residual interference contribution, the higher will be the performance degradation.

With the method proposed in the above mentioned state of the art documents for the phase estimation, the accuracy of the estimation can be improved by using longer TSs. Nevertheless, a too long TS would waste the system efficiency (stealing space in the busts payload to the useful information symbols). Thus, in these publications it is suggested to use this TS of ~32 , ~64 bits.

Therefore it is known from the state of the art to use an interference cancelation scheme to remove collisions, whenever a packet arrives at the gateway without collisions. For the interference cancelation the interfering signals are reconstructed estimating the frequency shift and the symbol timing on decoded replicas, while the phase rotation $\phi_i$ is directly estimated on the colliding burst. The phase is estimated by means of a training sequence.

It is an object of the present invention to provide for a method of transmitting data using the CRDSA method whereby the interference cancelation resulting from data packets of different users arriving on the same slot is improved. According to the invention this object is achieved by the features of method claim 1.

In the inventive method of transmitting data a transmission channel towards an access point is shared among a plurality of users. The data is transmitted using the CRDSA method. Thereby the burst structure is given by:

$$\mathbf{b}^{(i)} = \{b_k^{(i)}\} = \{d_0^{(i)}, d_1^{(i)}, \ldots, d_{k-1}^{(i)}, p_0^{(i)}, p_1^{(i)}, \ldots, p_{n\cdot k-1}^{(i)}\} \ .$$

Therefore it is preferred that the there is no more overhead due to the insertion of training sequence (meaning that all the payload is given by data symbols).

The signals belonging to data packets of different users may arrive within the same CRDSA slot with a random phase offset $\phi_i$.

In case the payloads belonging to different bursts are nearly random sequences an estimation of the phase offset $\phi_i$ is performed according to:

$$\hat{\phi}_i = arg\left\{\sum_{w=0}^{n-1} r_w^* b_w^{(i)}\right\}.$$

This case is defined as Full Frame Correlation (FFC) whereby it is assumed that the burst payloads are nearly random sequences.

In case that it cannot be guaranteed that the payloads belonging to different bursts are nearly random sequences a physical layer Forward Error Correction is applied by using a code generating a sub-matrix for the parity part of the burst structure which is a nearly random sequence. For example an LDPC or turbo code can be used for this purpose. The estimation of the phase offset $\phi_i$ is exclusively performed on the sub-sequence constituting the parity part of the burst structure which is a nearly random sequence according to :

$$\hat{\phi}_i = arg\left\{\sum_{w=k}^{n-1} r_w^* b_w^{(i)}\right\}.$$

In these equations, $b^{(i)}_w$ represents the w-th symbol belonging to the burst transmitted by user I, and $r^*_w$ represents the w-th received signal sample. Note that in the expression above, the summation runs properly from k to n-1, i.e., only on the parity symbols of the burst.

This case is defined as Partial Frame Correlation (PFC), meaning that the assumption of nearly-random bursts cannot be guaranteed so that the above described procedure (Full Frame Correlation) cannot be applied, since the cross-correlation among users could be high, not allowing any rejection (i.e. cancellation).

It is preferred that the sequence $b^{(i)}$ is used as a training sequence whereby $b^{(i)}$ is known from previous decoding steps in other slots. It is preferred that the sequence $b^{(i)}$ has a length of more than 128 Bits. Therefore thanks to the sequence length which may be much larger than the length a usual training sequence, the processing gain is huge. As an example a normal training sequence can be made of 64 Bits. A burst can have n=4096 bits. The interference is rejected in the first case by $10\log_{10} 64 = 18$ dB (processing gain). In the second case, it would be rejected by $10\log_{10} 4096 = 36$ dB.

In a preferred embodiment the sub-matrix constituting the payload or the parity part of the burst structure is defined as a nearly random sequence, when the probability that an entry in the matrix is 0 and the probability that an entry in the matrix is 1 are both 0,5 ($Pr\{p_{ij}=0\}=Pr\{p_{ij}=1\}=0.5$).

In the following the Partial Frame Correlation is described in more detail:

A case is considered where two sources produce two information sequences $\mathbf{x}^{(1)}$, $\mathbf{x}^{(2)}$ k bits each, and that the Hamming distance between the two sequences is small, e.g., the two sequences differ in a few bits. Denote by $c^{(1)}$, $c^{(2)}$ the n-bits encoded sequences, i.e.

$$\mathbf{c}^{(1)} = \mathbf{G}\mathbf{x}^{(1)}, \qquad \mathbf{c}^{(2)} = \mathbf{G}\mathbf{x}^{(2)},$$

where $\mathbf{G}$ is the (k x n) generator matrix of the forward error correction (FEC) code. Assume $\mathbf{G}$ to be in systematic form, $\mathbf{G}=[\mathbf{I}|\mathbf{P}]$. If the FEC code is properly designed, the sub-matrix $\mathbf{P}$ would be a (k x (n-k)) binary matrix with nearly independent and identically distributed (i.i.d.) entries, with $Pr\{p_{ij}=0\}=Pr\{p_{ij}=1\}=0.5$. Under this assumptions, the parity parts of $c^{(1)}$ and $c^{(2)}$ would be given by two nearly-random sequences. This would not happen if the FEC is for instance a convolutional code.

It is preferred that each source generating a burst uses a source coding technique and/or a randomizer so that the payloads belonging to different bursts are nearly random sequences.

Training sequences are usually a-priori known to the receiver which uses this knowledge to enhance the parameter estimation. It is preferred to exploit the parity bits of the date frame as training sequences, i.e.it is not necessary to include a pattern of known bits, which lowers the efficiency of the scheme.

It is preferred that the random delay $\varepsilon^{(i)}$ and the random frequency shift $f^{(i)}$ which is uniformly distributed over the interval $(-f^{max}, f^{max})$ are directly estimated with a good accuracy on the corresponding burst replicas that have been already recovered.

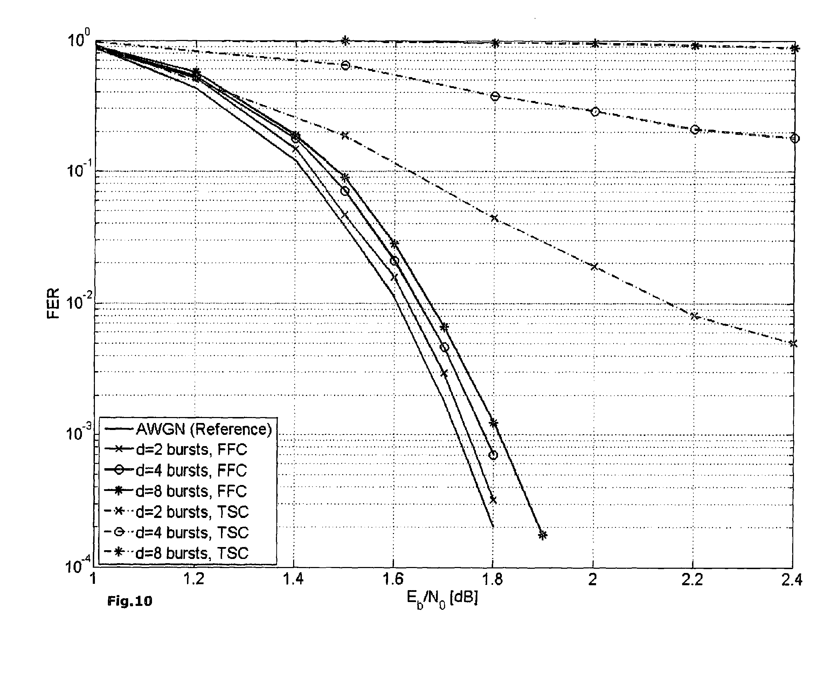

In the following a preferred embodiment of the invention is explained with regard to figure 10, whereby the inventive method is compared to the state of the art.

Figure 10 shows the Frame Error Rate vs. the Signal-to-Noise Ratio (Eb/N0) for the (4096,2048) LDPC code of the DVB-RCS+M standard (QPSK modulation, 50 iterations of the approximate-min* algorithm; IC implemented on the oversampled signal, oversampling factor M=8; Various number of colliding packets (d)).

The FER degradation w.r.t. the number of bursts colliding in the same slot is depicted in Figure 10. The dot-dashed plots are referred to the case where the TS correlation (TSC) is used. The solid line refers to the pure Additive White Gaussian Noise (AWGN) performance (no bursts colliding). The degradation is large: at an SNR=1.8 dB, the AWGN FER is close to $10^{-4}$. With 2 bursts colliding (1 IC), the FER rises up to $4*10^{-2}$. With 4 bursts colliding (3 ICs) the FER goes up to 0.4. With 8 bursts colliding (7 ICs) the FER is almost 1. These results have been obtained using for the simulation the (4096 bits, 2048 bits) LDPC code of the DVB-RCS+M standard, and a TS of 64 bits.

The process for slots with variable numbers (d) of collisions according to the invention has also been simulated. For the simulations, for each transmission attempt there have been generated the parameters according to the distributions discussed before. The received signal r(t) then has been sampled with an oversampling factor Ms=8. The resulting samples have been then processed by the IC algorithm. The estimation of the phase offsets has been implemented using $b^{(i)}$ as training sequences, where for each user $b^{(i)}$ is a sequence of 2048 QPSK symbols. (Quadrature Phase Shift Keying). For each burst, the information sequence was generated at random, and was then encoded through the (4096,2048) LDPC code of the DVB-RCS+M standard. The performance in terms of FER vs Eb/N0 is depicted in Figure 10 (full frame correlation, FFC) and compared to the case where a TS of 64 bits is used (TSC). The loss w.r.t. the AWGN case is now negligible, and even with d=8 collisions (7 ICs) the loss is minimal, especially when compared with the result of TSC.

The method proposed here can be applied in all types of commercial wireless and wired transmission systems. The inventive method can be applied in particular for interactive satellite services as DVB-RCS, where CRDSA/IRSA may become soon the new multiple access standard.

## Claims

1. Method of transmitting data, whereby a transmission channel towards an access point is shared among a plurality of users,

the data being transmitted using the Contention Resolution Diversity Slotted Aloha, CRDSA, method,

whereby the burst structure is given by:

$$\mathbf{b}^{(i)} = \{b_k^{(i)}\} = \{d_0^{(i)}, d_1^{(i)}, \ldots, d_{k-1}^{(i)}, p_0^{(i)}, p_1^{(i)}, \ldots, p_{n-k-1}^{(i)}\}$$,

whereby $d^{(i)}$ is the burst payload, namely the information part and $p^{(i)}$ is the parity part added by the physical layer Forward Error Correction, FEC,

whereby the signals belonging to data packets of different users may arrive within the same CRDSA slot with a random phase offset $\phi_i$,

**characterized in that**

a) in case the payloads belonging to different bursts are nearly random sequences an estimation of the phase offset $\phi_i$ is performed according to:

$$\hat{\phi}_i = arg \left\{ \sum_{w=0}^{n-1} r_w^* b_w^{(i)} \right\}$$

b) in case that it cannot be guaranteed that the payloads belonging to different bursts are nearly random sequences a physical layer Forward Error Correction, FEC, is applied by using a code generating a sub-matrix for the parity part of the burst structure which is a nearly random matrix and

the estimation of the phase offset $\phi_i$ is exclusively performed on the sub-sequence constituting the parity part of the burst structure which is a nearly random sequence according to:

$$\hat{\phi}_i = arg \left\{ \sum_{w=k}^{n-1} r_w^* b_w^{(i)} \right\}$$,

whereby $b_w^{(i)}$ represents the w-th symbol belonging to the burst transmitted by user i, and $r_w^i$ represents the

w-th received signal sample, whereby the summation runs from k to n-1, i.e., only on the parity symbols of the burst.

2. Method of transmitting data according to claim 1, **characterized in that** a
Low Density Parity Check, LDPC, or turbo code is used for performing the physical layer Forward Error Correction.

3. Method of transmitting data according to one of claims 1 or 2, **characterized in that** the sub-matrix constituting the payload or the parity part of the burst structure is defined as a nearly random sequence when the probability that an entry in the matrix is 0 and the probability that an entry in the matrix is 1 are both 0,5.

4. Method of transmitting data according to one of claims 1-3, **characterized in that** each source generating a burst uses a source coding technique and/or a randomizer so that the payloads belonging to different bursts are nearly random sequences.

5. Method of transmitting data according to one of claims 1-4, **characterized in that** the code used for physical layer Forward Error Correction is not a convolutional code when it cannot be guaranteed that the payloads belonging to different bursts are nearly random sequences.

6. Method of transmitting data according to one of claims 1-5, **characterized in that** the sequence b$^{(i)}$ is used as a training sequence, whereby b$^{(i)}$ is known from previous decoding steps in other slots.

7. Method of transmitting data according to claim 6, **characterized in that** the sequence b$^{(i)}$ has a length of more than 128 Bits.

8. Method of transmitting data according to one of claims 1-7, **characterized in that** the signals belonging to data packets of different users may arrive within the same CRDSA slot with a random delay $\varepsilon^{(i)}$ and/or a random frequency shift f$^{(i)}$, whereby $\varepsilon^{(i)}$ and f$^{(i)}$ can be estimated with a good accuracy on corresponding burst replicas that have already been recovered.


**Patentansprüche**

1. Verfahren zur Übertragung von Daten, wobei ein Übertragungskanal zu einem Zugangspunkt von mehreren Nutzern gemeinsam genutzt wird,
   wobei die Daten unter Verwendung des Contention-Resolution-Diversity-Slotted-Aloha-Verfahrens, CRDSA, übertragen werden,
   wobei die Burst-Struktur angegeben ist durch:

$$b^{(i)} = \{b_k^{(i)}\} = \{d_0^{(i)}, d_1^{(i)}, \ldots, d_{k-1}^{(i)}, p_0^{(i)}, p_1^{(i)}, \ldots, p_{n-k-1}^{(i)}\} \quad ,$$

wobei d$^{(i)}$ die Burst-Payload, das heißt der Informationsteil ist, und p$^{(i)}$ der Paritätsteil ist, welcher durch die Physical Layer Forward Error Correction, FEC, hinzugefügt wird,
wobei die zu den Datenpaketen verschiedener Benutzer gehörenden Signale mit einem zufälligen Phasenversatz $\phi_i$ innerhalb des gleichen CRDSA-Slots eintreffen können,
**dadurch gekennzeichnet, dass**

   a) wenn die zu verschiedenen Bursts gehörenden Payloads nahezu zufällige Sequenzen sind, eine Schätzung des Phasenversatzes $\phi_i$ entsprechend

$$\hat{\phi}_i = arg \left\{ \sum_{w=0}^{n-1} r_w^* b_w^{(i)} \right\}$$

durchgeführt wird;
   b) wenn nicht gewährleistet werden kann, dass die zu verschiedenen Bursts gehörenden Payloads nahezu zufällige Sequenzen sind, eine Physical Layer Forward Error Correction, FEC, unter Verwendung eines Codes vorgenommen wird, der eine Sub-Matrix für den Paritätsteil der Burst-Struktur erzeugt, welche eine nahezu zufällige Matrix ist, und
   die Schätzung des Phasenversatzes $\phi_i$ ausschließlich für die Subsequenz erfolgt, welche den Paritätsteil der Burst-Struktur bildet, welcher eine nahezu zufällige Sequenz ist, gemäß:

$$\hat{\phi}_i = arg \left\{ \sum_{w=k}^{n-1} r_w^* b_w^{(i)} \right\}.$$

wobei $b_\omega^{(i)}$ das zu dem von dem Nutzer i übertragenen Burst gehörende w-te Symbol angibt und $r_\omega^*$ das w-te empfangene Signalsample angibt, wobei die Summenbildung sich von k bis n-1 erstreckt, d.h. nur auf die Paritätssymbole des Bursts.

2. Verfahren zur Übertragung von Daten nach Anspruch 1, **dadurch gekennzeichnet, dass** ein Low Density Parity Check, LDPC, oder Turbo-Code zur Durchführung der Physical Layer Forward Error Correction, FEC, verwendet wird.

3. Verfahren zur Übertragung von Daten nach einem der Ansprüche 1 oder 2, **dadurch gekennzeichnet, dass** die Sub-Matrix, welche die Payload oder den Paritätsteil der Burst-Struktur bildet, als eine nahezu zufällige Sequenz definiert ist, wenn die Wahrscheinlichkeit, dass ein Eintrag in der Matrix 0 ist, und die Wahrscheinlichkeit, dass ein Eintrag in der Matrix 1 ist, jeweils 0,5 betragen.

4. Verfahren zur Übertragung von Daten nach einem der Ansprüche 1 - 3, **dadurch gekennzeichnet, dass** jede einen Burst erzeugende Quelle eine Quellencodierungstechnik und/oder einen Randomizer verwendet, so dass die zu verschiedenen Bursts gehörenden Payloads nahezu zufällige Sequenzen sind.

5. Verfahren zur Übertragung von Daten nach einem der Ansprüche 1 - 4, **dadurch gekennzeichnet, dass** der für die Physical Layer Forward Error Correction, FEC, verwendete Code kein Konvolutionscode ist, wenn nicht gewährleistet werden kann, dass die zu verschiedenen Bursts gehörenden Payloads nahezu zufällige Sequenzen sind.

6. Verfahren zur Übertragung von Daten nach einem der Ansprüche 1 - 5, **dadurch gekennzeichnet, dass** die Sequenz $b^{(i)}$ als eine Trainingssequenz verwendet wird, wobei $b^{(i)}$ aus vorherigen Dekodierschritten in anderen Slots bekannt ist.

7. Verfahren zur Übertragung von Daten nach Anspruch 6, **dadurch gekennzeichnet, dass** die Sequenz $b^{(i)}$ eine Länge von mehr als 128 Bits aufweist.

8. Verfahren zur Übertragung von Daten nach einem der Ansprüche 1 - 7, **dadurch gekennzeichnet, dass** die zu Datenpaketen verschiedener Nutzer gehörenden Signale innerhalb des selben CRDSA-Slots mit einer zufälligen Verzögerung $\varepsilon^{(i)}$ und/oder einer zufälligen Frequenzverschiebung $f^{(i)}$ ankommen können, wobei $\varepsilon^{(i)}$ und $f^{(i)}$ mit guter Genauigkeit anhand von bereits wiedergewonnenen Burst-Repliken geschätzt werden können.

**Revendications**

1. Procédé de transmission de données, dans lequel un canal de transmission allant vers un point d'accès est partagé entre une pluralité d'utilisateurs,
les données étant transmises au moyen de la méthode Aloha à segmentation temporelle avec diversité et résolution des conflits d'accès (*Contention Resolution Diversity Slotted Aloha,* CRDSA),
dans lequel la structure d'une salve est donnée par :

$$\mathbf{b}^{(i)} = \{b_k^{(i)}\} = \{d_0^{(i)}; d_1^{(i)}, \ldots, d_{k-1}^{(i)}; p_0^{(i)}; p_1^{(i)}; \ldots; p_{n-k-1}^{(i)}\}$$ ,

où $d^{(i)}$ représente la charge utile de la salve, à savoir la partie d'information, et $p^{(i)}$ représente la partie de parité ajoutée par la couche physique de correction d'erreurs sans voie de retour (*Forward Error Correction,* FEC), dans lequel les signaux appartenant à des paquets de données de différents utilisateurs peuvent arriver dans le même intervalle CRDSA avec un décalage de phase aléatoire $\varphi_i$, **caractérisé en ce que**

a) lorsque les charges utiles appartenant à différentes salves sont des séquences presque aléatoires, une estimation du décalage de phase $\varphi_i$ est réalisée selon :

$$\hat{\phi}_i = arg \left\{ \sum_{w=0}^{n-1} r_w^* b_w^{(i)} \right\}$$

b) lorsqu'il ne peut pas être garanti que les charges utiles appartenant à différentes salves sont des séquences presque aléatoires, une couche physique FEC est appliquée au moyen d'un code générant une sous-matricé pour la partie de parité de la structure de salve qui est une matrice presque aléatoire, et l'estimation du décalage de phase $\varphi_i$ est exclusivement réalisée sur la sous-séquence constituant la partie de parité de la structure de salve qui est une séquence presque aléatoire, selon :

$$\hat{\phi}_i = arg \left\{ \sum_{w=k}^{n-1} r_w^* b_w^{(i)} \right\}$$ ,

où $b_w^{(i)}$ représente le $w^{\text{ième}}$ symbole appartenant à la salve transmise par un utilisateur i et $r_w^*$ représente le $w^{\text{ième}}$ échantillon de signal reçu, où la sommation fonctionne de k à n-1, à savoir uniquement sur les symboles de parité de la salve.

2. Procédé de transmission de données selon la revendication 1, **caractérisé en ce qu'**un contrôle de parité à faible densité (*Low Density Parity Check*, LDPC) ou un turbocode est utilisé pour réaliser la correction d'erreurs sans voie de retour en couche physique.

3. Procédé de transmission de données selon l'une des revendications 1 ou 2, **caractérisé en ce que** la sous-matrice constituant la charge utile ou la partie de parité de la structure de salve est définie par une séquence presque aléatoire lorsque la probabilité qu'une entrée dans la matrice soit 0 et la probabilité qu'une entrée dans la matrice soit 1 sont toutes deux égales à 0,5.

4. Procédé de transmission de données selon l'une des revendications 1 à 3, **caractérisé en ce que** chaque source générant une salve utilise une technique de codage de source et/ou un générateur d'aléas de telle sorte que les charges utiles appartenant à différentes salves sont des séquences presque aléatoires.

**5.** Procédé de transmission de données selon l'une des revendications 1 à 4, **caractérisé en ce que** le code utilisé pour la correction d'erreurs sans voie de retour en couche physique n'est pas un code à convolution lorsqu'il ne peut pas être garanti que les charges utiles appartenant à différentes salves sont des séquences presque aléatoires.

**6.** Procédé de transmission de données selon l'une des revendications 1 à 5, **caractérisé en ce que** la séquence $b^{(i)}$ est utilisée en tant que séquence d'apprentissage, dans lequel $b^{(i)}$ est connu d'après des étapes de décodage préalables dans d'autres intervalles.

**7.** Procédé de transmission de données selon la revendication 6, **caractérisé en ce que** la séquence $b^{(i)}$ présente une longueur de plus de 128 bits.

**8.** Procédé de transmission de données selon l'une des revendications 1 à 7, **caractérisé en ce que** les signaux appartenant à des paquets de données de différents utilisateurs peuvent arriver dans le même intervalle CRDSA avec un retard $\varepsilon^{(i)}$ aléatoire et/ou un déplacement de fréquence $f^{(i)}$ aléatoire, dans lequel $\varepsilon^{(i)}$ et $f^{(i)}$ peuvent être estimés avec une bonne précision sur des copies de salve correspondantes qui ont déjà été récupérées.

Fig.1

Gate
way

Frame,Tf
= Ns Slots

ACK

ACK

Slot,Ts

time

Collision

User 1

User 2

User 3

**Fig.2**

**Fig.3**

**Fig.4**

Frame,Tf
= Ns Slots

Slot,Ts

Gate way

ACK

time

User 1    User 2    User 3

Fig.5

Fig.6

|  | SLOT 1 | SLOT 2 | SLOT 3 | SLOT 4 |
|---|---|---|---|---|
| User 1 |  |  | Burst 1 |  |
| User 2 | Burst 2 (replica 1) |  | Burst 2 (replica 2) |  |
| User 3 |  |  | Burst 3 (replica 1) | Burst 3 (replica 2) |
| User 4 |  | Burst 4 (replica 1) | Burst 4 (replica 2) |  |

| Burst 2 | Burst 4 | Collision | Burst 3 |
|---|---|---|---|
| Burst 2 correctly RX | Burst 4 correctly RX |  | Burst 3 correctly RX |

Fig.7

18

|  | SLOT 1 | SLOT 2 | SLOT 3 | SLOT 4 |
|---|---|---|---|---|
|  |  |  | Burst 1 |  |
|  | Burst 2 (replica 1) |  |  |  |
|  |  |  |  | Burst 3 (replica 2) |
|  |  | Burst 4 (replica 1) |  |  |

| Burst 2 | Burst 4 | Burst 1 | Burst 3 |
|---|---|---|---|
| Burst 2 correctly RX | Burst 4 correctly RX | Burst 3 correctly RX | Burst 3 correctly RX |

Fig.10

# EP 2 355 575 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060171418 A1

**Non-patent literature cited in the description**

- **E. CASINI ; R.D. GAUDENZI ; O.D.R.HERRERO.** Contention resolution diversity slotted aloha (crdsa): An enhanced random access scheme for satellite access packet networks. *IEEE Transactions on Wireless Communications,* April 2007, vol. 6, 1408-1419

- **E.CASINI ; R. DE GAUDENZI ; O. DEL RIO.** Contention Resolution Diversity Slotted Aloha (CRDSA): An Enhanced Random Access Scheme for Satellite Access Packet Networks. *IEEE Transaction on Wireless Communications,* April 2007